# EUROPEAN PATENT APPLICATION

(11) **EP 2 360 501 A1**
(43) Date of publication of application: **24.08.2011**
(21) Application number: 11150925.3
(22) Date of filing: 14.01.2011
(51) Int. Cl.: G02B 6/00

(54) **Backlight unit and display device having the same**

(30) Priority: 15.01.2010 KR 20100004117
(71) Applicant: LG Innotek Co., Ltd., Seoul 100-714 (KR)
(72) Inventor: Park, Dong Wook, Seoul 100-714 (KR)
(74) Representative: Zardi, Marco

(57) **Abstract**

A backlight unit is provided. The backlight unit comprises a light emitting part configured to emit light; an optical engine in which light provided from the light emitting part propagates; and a light guide plate in which light provided from the optical engine propagates, wherein uneven parts are disposed on a surface of the optical engine from which light is emitted.

## Description

### BACKGROUND

The present disclosure relates to a backlight unit and a display device including the backlight unit.

A liquid crystal display may comprise a liquid crystal panel configured to display images, and a backlight unit disposed under the liquid crystal panel to provide light to the liquid crystal panel. The backlight unit may comprise a lamp or a light emitting diode (LED) as a light source.

In the market, display devices such as liquid crystal displays are required to be much slimmer to satisfy customer's demands. For making slimmer back light unit, the Edge-LED lighting method can be used. In the Edge-LED lighting method, a plurality of LEDs are disposed not behind the entire LCD panel, but along the edges of the back light unit, which makes the LED TV thin.

Meanwhile, since the price of LED is still high, manufacturing cost reduction and efficient use of light are required.

### SUMMARY

Embodiments provide a backlight unit that can provide light efficiently and be made with lower costs, and a display device including the backlight unit.

In an aspect of the present invention, a backlight unit is provided comprising: a light emitting part configured to emit light; an optical engine in which light provided from the light emitting part propagates; and a light guide plate in which light provided from the optical engine propagates, wherein uneven parts are disposed on a surface of the optical engine from which light is emitted. The light emitting part may comprise a light emitting device. Due to the uneven parts, the light is dispersed across the back light unit and the efficient of the light can be improved.

In another aspect of the present invention, the light emitting part is disposed at a side of the optical engine. Since the light emitting part is disposed at a side of the optical engine and the optical engine comprises uneven parts, less number of LEDs can be used in the production to achieve similar level of light. Therefore, the backlight unit may be manufactured through simple processes with lower costs.

In another aspect of the present invention, the side of the optical engine at which the light emitting part is disposed is inclined. Furthermore, the light emitting part may be disposed at the side of the optical engine in an inclined position. In this way, the incident angle of light emitted from the light emitting part can be adjusted.

In another aspect of the present invention, an uneven part among the uneven parts is disposed on a surface of the light guide plate corresponding to the surface of the optical engine from which light is emitted. This helps the light scattered uniformly through the light guide plate.

In another aspect of the present invention, the backlight unit further comprises a reflector disposed at a surface of the optical engine. The the backlight unit may further comprise an uneven part among the uneven parts being disposed at the optical engine in a region corresponding to the reflector.

In another aspect of the present invention, the uneven part disposed at the optical engine in the region corresponding to the reflector is formed of groove shape, protrusion shape, regular pattern shape, or random pattern shape.

The uneven pattern may have a direction. For example, when the unevent part is formed of groove shape or protrusion shape, etc, the groove or protrusion may have a linear shape, and the direction of it can be defined.

In this situation, the uneven part disposed at the optical engine in the region corresponding to the reflector may be formed along a first direction parallel to the longitudinal direction of the optical engine. Alternatively, the uneven part disposed at the optical engine in the region corresponding to the reflector may be formed along a second direction perpendicular to the longitudinal direction of the optical engine. Otherwise, the optical engine may have a plurality of uneven parts whose direction are different each other.

In another aspect of the present invention, the optical engine is formed of a material selected at least one from the group consisting of polyimide (PI), polymethylmethacrylate (PMMA), a silicon resin, and an epoxy resin.

In another aspect of the present invention, a display device is provided comprising: a backlight unit; and a liquid crystal panel configured to receive light from the backlight unit, wherein the backlight unit comprising: a light emitting part configured to emit light; an optical engine in which light provided from the light emitting part propagates; and a light guide plate in which light provided from the optical engine propagates, wherein uneven parts are disposed on a surface of the optical engine from which light is emitted.

The details of one or more embodiments are set forth in the accompanying drawings and the description below. Other features will be apparent from the description and drawings, and from the claims.

### BRIEF DESCRIPTION OF THE DRAWINGS

Fig. 1 is a perspective view illustrating a backlight unit according to an embodiment.

Fig. 2 is a sectional view taken along line A-A of Fig. 1.

Fig. 3 is a view illustrating an optical engine illustrated in Fig. 1.

Fig. 4 is a view illustrating a backlight unit according to another embodiment.

Fig. 5 is a view illustrating a backlight unit according to another embodiment.

Fig. 6 is a view illustrating a liquid crystal display according to an embodiment.

Fig. 7 is a perspective view illustrating a backlight unit according to another embodiment.

Fig. 8 is a sectional view taken along line B-B of Fig. 7.

Fig. 9 is a view illustrating a light guide plate illustrated in Fig. 7.

Fig. 10 is a view illustrating a backlight unit according to another embodiment.

Fig. 11 is a view illustrating a backlight unit according to another embodiment.

### DETAILED DESCRIPTION OF THE EMBODIMENTS

In the following description, it will be understood that when a part such as a layer (film), a region, a pattern, a structure, and a substrate is referred to as being 'on' another part, it can be directly on the another part, or intervening parts may also be present. Further, it will be understood that when a part is referred to as being 'under' another part, it can be directly under the other part, and one or more intervening parts may also be present. In addition, it will also be understood that when a part is referred to as being 'between' two parts, it can be the only part between the two parts, or one or more intervening parts may also be present. Spatially relative terms, such as "upper" and "lower" are used herein for ease of description to describe one element or feature's relationship to another element(s) or feature(s) as illustrated in the figures.

In the drawings, the thicknesses or sizes of layers are exaggerated, omitted, or schematically shown for brevity of description and clarity. In addition, the sizes of elements shown in the drawings may be different from their real sizes.

Embodiments will now be described with reference to the accompanying drawings.

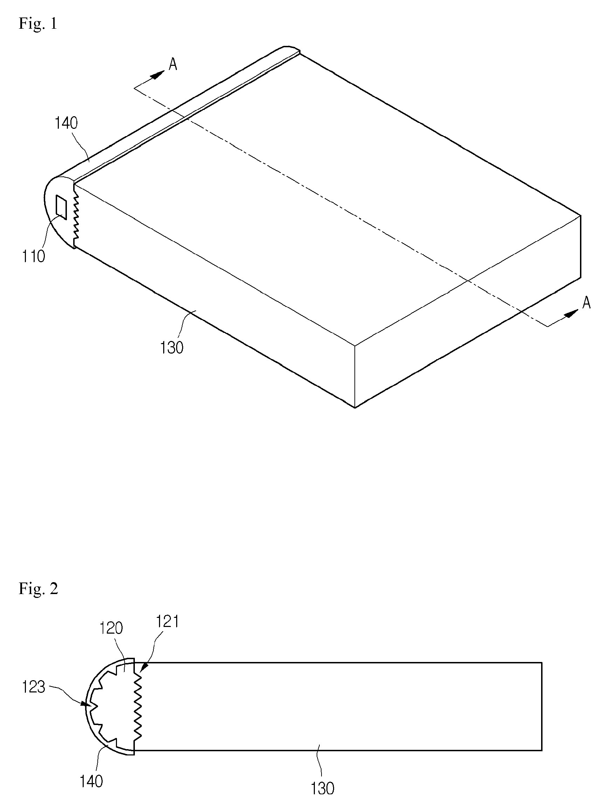

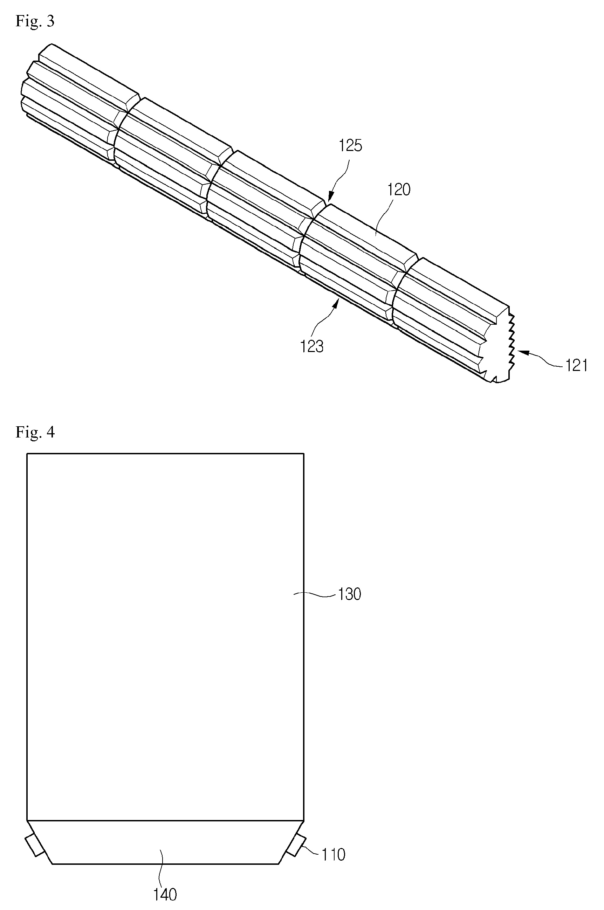

Fig. 1 is a perspective view illustrating a backlight unit according to an embodiment, Fig. 2 is a sectional view taken along line A-A of Fig. 1, and Fig. 3 is a view illustrating an optical engine illustrated in Fig. 1.

The backlight unit of the embodiment comprises a light emitting part 110, an optical engine 120, a light guide plate 130, and a reflector 140.

The light emitting part 110 may comprise a light emitting device such as a light emitting diode. Alternatively, the light emitting part 110 may comprise a light emitting device package. The light emitting part 110 may comprise a red light emitting device, a green light emitting device, a blue light emitting device, and a white light emitting device. The light emitting part 110 may provide light to the optical engine 120.

The light emitting part 110 may be disposed at a side or sides of the optical engine 120. For example, the light emitting part 110 may be disposed at a side of the optical engine 120. In another example, the light emitting part 110 may be disposed at both sides of the optical engine 120. The reflector 140 may be disposed at the optical engine 120. The reflector 140 may be disposed at the rear and lateral sides of the optical engine 120. Light emitted from the light emitting part 110 may propagate throughout the inside of the optical engine 120. Light emitted from the light emitting part 110 disposed at a side of the optical engine 120 may propagate to the other side of the optical engine 120. In addition, light emitted from the light emitting part 110 may be reflected by the reflector 140 toward the other side of the optical engine 120.

A first uneven part 121 is disposed on a surface of the optical engine 120. An uneven part corresponding to the first uneven part 121 is disposed on a surface of the light guide plate 130 facing the surface of the optical engine 120 where the first uneven part 121 is disposed. That is, the first uneven part 121 is disposed on the surface of the optical engine from which light is emitted to the light guide plate 130. Owing to the first uneven part 121, light propagating in the optical engine 120 can be efficiently extracted to the outside. Then, the light extracted from the optical engine 120 to the outside may be efficiently incident on the light guide plate 130. Light provided by the optical engine 120 may propagate in the light guide plate 130. Light propagating in the light guide plate 130 may be extracted through the upper side of the light guide plate 130.

A second uneven part 123 is disposed on a surface of the optical engine 120 corresponding to the reflector 140. The second uneven part 123 may be formed along a first direction parallel to the longitudinal direction of the optical engine 120. That is to say, on the circumference of the optical engine 120, a plurality of paths can be defined as an intersection formed by the circumference of the optical engine 120 and arbitrary planes parallel to the longitudinal direction of the optical engine 120, and the second uneven part 125 may be formed along at least one of the plurality of paths formed as above. Owing to the second uneven part 123, light emitted from the light emitting part 110 may be efficiently dispersed in the optical engine 120. At a backside of the second uneven part 123, the reflector 140 is disposed. Thus, light incident on the second uneven part 123 may be reflected and efficiently dispersed in the optical engine 120.

The reflector 140 may be formed of a metal such as silver (Ag), tungsten (W), and aluminum (Al), or another reflective material. The optical engine 120 may be formed of a resin. The reflector 140 may be disposed on the optical engine 120 by deposition or coating. For example, the optical engine 120 may be formed of a material such as polyimide (PI) or polymethylmethacrylate (PMMA). Alternatively, the optical engine 120 may be formed of a silicon resin or an epoxy resin.

A third uneven part 125 may be disposed on the optical engine 120. The third uneven part 125 may be formed along a second direction perpendicular to the longitudinal direction of the optical engine 120. That is to say, on the circumference of the optical engine 120, a plurality of paths can be defined as an intersection formed by the circumference of the optical engine 120 and arbitrary planes perpendicular to the longitudinal direction of the optical engine 120, and the third uneven part 125 may be formed along at least one of the plurality of paths formed as above. Owing to the second uneven part 123 and the third uneven part 125, light emitted from the light emitting part 110 may be reflected and dispersed. In this way, light emitted from the light emitting part 110 disposed at a side of the optical engine 120 can propagate to the other side of the optical engine 120. Light reflected by the second uneven part 123 and the third uneven part 125 may be incident on the light guide plate 130.

According to the embodiment, light emitted from the light emitting part 110 disposed at a side of the optical engine 120 can propagate uniformly throughout the inside of the optical engine 120. In addition, the light uniformly propagating in the optical engine 120 may be uniformly supplied to the light guide plate 130. That is, according to the embodiment, although the light emitting part 110 is disposed at a side of the optical engine 120, light can be sufficiently supplied to the light guide plate 130. Therefore, according to the embodiment, fewer light emitting devices may be used in the backlight unit, and thus the backlight unit may be manufactured through simple processes with lower costs.

Alternatively, the side of the optical engine 120 where the light emitting part 110 is disposed may be inclined. By this structural change, the incident angle of light emitted from the light emitting part 110 can be adjusted. If necessary, the side of the optical engine 120 may be inclined in a manner such that some of light emitted from the light emitting part 110 can be toward the light guide plate 130. This structure is shown in Fig. 4. In Fig. 4, an optical engine 120 is not shown because it is hidden in a reflector 140.

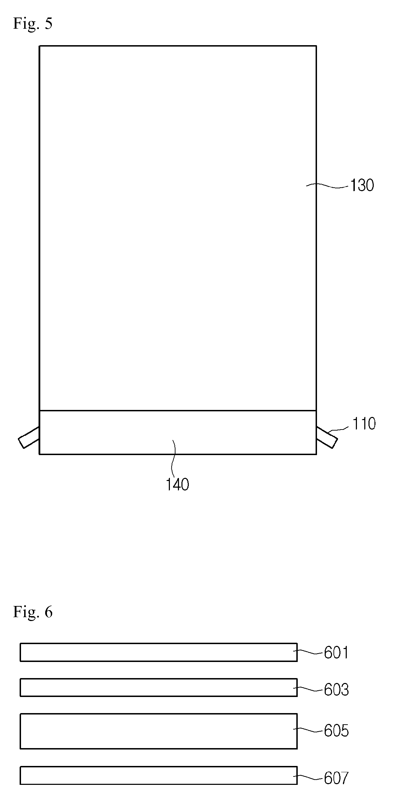

The light emitting part 110 may be disposed at a side of the optical engine 120 in an inclined position. For example, instead of inclining a side of the optical engine 120, the light emitting part 110 may be disposed at the side of the optical engine 120 in an inclined position. In this way, the incident angle of light emitted from the light emitting part 110 can be adjusted. If necessary, the angle of the light emitting part 110 may be adjusted so that some of light emitted from the light emitting part 110 can be toward the light guide plate 130. This structure is shown in Fig. 5. In Fig. 5, an optical engine 120 is not shown because it is hidden by a reflector 140.

The first to third uneven parts 121, 123, and 125 may have a groove shape. The groove shape may be varied. For example, the first to third uneven parts 121, 123, and 125 may have a protrusion shape. The first to third uneven parts 121, 123, and 125 may have a regular or random pattern shape. According to the characteristics of an optical system, the shapes of the first to third uneven parts 121, 123, and 125 may be varied for optimization.

The light emitting part 110 may be disposed at a side of the optical engine 120. For example, the light emitting part 110 may be disposed in contact with a side of the outside of the optical engine 120. In another example, the light emitting part 110 may be disposed at a side of the inside of the optical engine 120.

The above-described backlight unit can be applied to a display device such as a liquid crystal display. In an embodiment shown in Fig. 6, a backlight unit 605 is disposed under a liquid crystal panel 601 to constitute a display device. The liquid crystal panel 601 may display images by using light emitted from the backlight unit 605. An optical sheet 603 may be disposed between the backlight unit 605 and the liquid crystal panel 601. The optical sheet 603 may comprise one or more sheets. The optical sheet 603 may comprise a diffusion sheet and a prism sheet. A reflection plate 607 may be disposed under the backlight unit 605. The reflection plate 607 is disposed under the backlight unit 605 so that light emitted from the backlight unit 605 can be reflected upward.

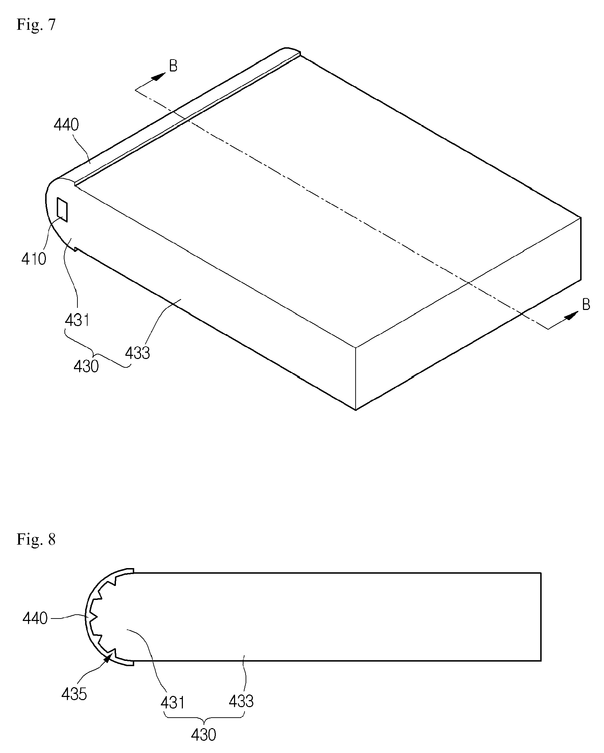

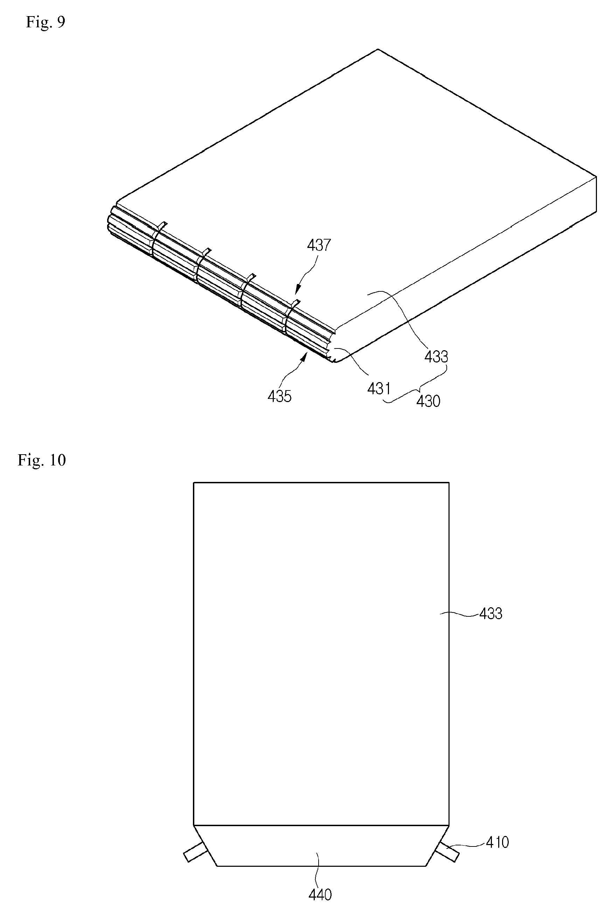

Fig. 7 is a perspective view illustrating a backlight unit according to another embodiment, Fig. 8 is a sectional view taken along line B-B of Fig. 7, and Fig. 9 is a view illustrating a light guide plate illustrated in Fig. 7.

The backlight unit of the embodiment comprises a light emitting part 410, a light guide plate 430, and a reflector 440.

The light emitting part 410 may comprise a light emitting device such as a light emitting diode. The light emitting part 410 may comprise a red light emitting device, a green light emitting device, a blue light emitting device, and a white light emitting device. The light emitting part 410 may provide light to the light guide plate 430.

The light guide plate 430 may comprise an optical engine 431 and an optical propagation part 433. Light provided from the light emitting part 410 may propagate through the optical engine 431. In addition, light provided from the optical engine 431 may propagate through the optical propagation part 433. The optical engine 431 and the optical propagation part 433 may be provided in one piece. That is, the optical engine 431 and the optical propagation part 433 may be integrated and provided as one body.

The light emitting part 410 may be disposed at a side or sides of the optical engine 431. For example, the light emitting part 410 may be disposed at a side of the optical engine 431. In another example, the light emitting part 410 may be disposed at both sides of the optical engine 431. The reflector 440 may be disposed at the optical engine 431. The reflector 440 may be disposed at the rear and lateral sides of the optical engine 431. Light emitted from the light emitting part 410 may propagate throughout the inside of the optical engine 431. Light emitted from the light emitting part 410 disposed at a side of the optical engine 431 may propagate to the other side of the optical engine 431. In addition, light emitted from the light emitting part 410 may be reflected by the reflector 440 toward the other side of the optical engine 431. Light provided from the optical engine 431 may propagate throughout the inside of the optical propagation part 433. Light propagating in the optical propagation part 433 may be extracted upward.

A first uneven part 435 is disposed at a surface of the optical engine 431 corresponding to the reflector 440. Owing to the first uneven part 435, light provided form the light emitting part 410 can propagate and disperse efficiently in the optical engine 431. The reflector 440 is disposed at the backside of the first uneven part 435. Thus, light incident on the first uneven part 435 can be reflected and dispersed efficiently in the optical engine 431.

The reflector 440 may be formed of a metal such as silver (Ag), tungsten (W), and aluminum (Al), or another reflective material. The optical engine 431 may be formed of a resin. The reflector 440 may be disposed on the optical engine 431 by deposition or coating. For example, the optical engine 431 may be formed of a material such as polyimide (PI) or polymethylmethacrylate (PMMA).

A second uneven part 437 may be disposed at the optical engine 431. Owing to the first uneven part 435 and the second uneven part 437, light provided from the light emitting part 410 can be reflected and dispersed. Thus, light emitted from the light emitting part 410 disposed at a side of the optical engine 431 may propagate to the other side of the optical engine 431. In addition, light reflected by the first uneven part 435 and the second uneven part 437 may be incident on the light guide plate 430 efficiently.

According to the embodiment, light emitted from the light emitting part 410 disposed at a side of the optical engine 431 can propagate uniformly throughout the inside of the optical engine 431. In addition, the light uniformly propagating in the optical engine 431 may be uniformly supplied to the light guide plate 430. That is, according to the embodiment, although the light emitting part 410 is disposed at a side of the optical engine 431, light can be sufficiently supplied to the light guide plate 430. Therefore, according to the embodiment, fewer light emitting devices may be used in the backlight unit, and thus the backlight unit may be manufactured through simple processes with lower costs.

Alternatively, the side of the optical engine 431 where the light emitting part 410 is disposed may be inclined. By this structural change, the incident angle of light emitted from the light emitting part 410 can be adjusted. If necessary, the side of the optical engine 431 may be inclined in a manner such that some of light emitted from the light emitting part 410 can be toward the optical propagation part 433. This structure is shown in Fig. 10. In Fig. 10, an optical engine 431 is not shown because it is hidden in a reflector 440.

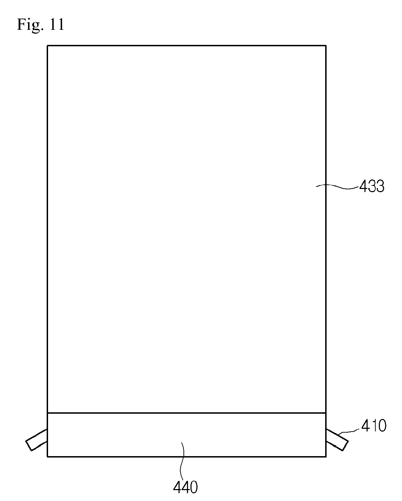

The light emitting part 410 may be disposed at a side of the optical engine 431 in an inclined position. For example, instead of inclining a side of the optical engine 431, the light emitting part 410 may be disposed at the side of the optical engine 120 in an inclined position. In this way, the incident angle of light emitted from the light emitting part 410 can be adjusted. If necessary, the angle of the light emitting part 410 may be adjusted so that some of light emitted from the light emitting part 410 can be toward the optical propagation part 433. This structure is shown in Fig. 11. In Fig. 11, an optical engine 431 is not shown because it is hidden by a reflector 440.

The first and second uneven parts 435 and 437 may have a groove shape. The groove shape may be varied. For example, the first and second uneven parts 435 and 437 may have a protrusion shape. The first and second uneven parts 435 and 437 may have a regular or random pattern shape. According to the characteristics of an optical system, the shapes of the first and second uneven parts 435 and 437 may be varied for optimization.

The light emitting part 410 may be disposed at a side of the optical engine 431. For example, the light emitting part 410 may be disposed in contact with a side of the outside of the optical engine 431. In another example, the light emitting part 410 may be disposed at a side of the inside of the optical engine 431.

The above-described backlight unit can be applied to a display device such as a liquid crystal display. That is, the backlight unit of the embodiment may be disposed under a liquid crystal panel to constitute a display device. The liquid crystal panel may display images by using light emitted from the backlight unit. An optical sheet may be disposed between the backlight unit and the liquid crystal panel. The optical sheet may comprise one or more sheets. The optical sheet may comprise a diffusion sheet and a prism sheet. A reflection plate may be disposed under the backlight unit. The reflection plate is disposed under the backlight unit so that light emitted from the backlight unit can be reflected upward.

As described above, the embodiments provide a backlight unit that can provide light efficiently and be made with lower costs, and a display device including the backlight unit.

In addition, the embodiments can be applied to light emitting devices for providing light efficiently.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure and the drawings. In addition to variations and modifications in the component parts and/or arrangements, alternative uses will also be apparent to those skilled in the art.

## Claims

1. A backlight unit comprising:
a light emitting part (110) configured to emit light;
an optical engine (120) in which light provided from the light emitting part (110) propagates; and
a light guide plate (130) in which light provided from the optical engine (120) propagates,
wherein uneven parts (121, 123, 125) are disposed on a surface of the optical engine (120) from which light is emitted.

2. The backlight unit according to claim 1, wherein the light emitting part (110) comprises a light emitting device.

3. The backlight unit according to claim 1, wherein the light emitting part (110) is disposed at a side of the optical engine (120).

4. The backlight unit according to claim 3, wherein the side of the optical engine (120) at which the light emitting part (110) is disposed is inclined.

5. The backlight unit according to claim 3, wherein the light emitting part (110) is disposed at the side of the optical engine (120) in an inclined position.

6. The backlight unit according to claim 1, wherein an uneven part (121) among the uneven parts (121, 123, 125) is disposed on a surface of the light guide plate (130) corresponding to the surface of the optical engine (120) from which light is emitted.

7. The backlight unit according to claim 1, further comprising a reflector (140) disposed at a surface of the optical engine (120).

8. The backlight unit according to claim 7, further comprising an uneven part (123, 125) among the uneven parts (121, 123, 125) being disposed at the optical engine (120) in a region corresponding to the reflector (140).

9. The backlight unit according to claim 8, wherein the uneven part (123) disposed at the optical engine in the region corresponding to the reflector is formed along a first direction parallel to the longitudinal direction of the optical engine (120).

10. The backlight unit according to claim 8, wherein the uneven part (125) disposed at the optical engine in the region corresponding to the reflector is formed along a second direction perpendicular to the longitudinal direction of the optical engine.

11. The backlight unit according to claim 8, wherein the uneven part disposed at the optical engine (120) in the region corresponding to the reflector (140) is formed of groove shape, protrusion shape, regular pattern shape, or random pattern shape.

12. The backlight unit according to claim 1, wherein the optical engine (120) is formed of a material selected at least one from the group consisting of polyimide (PI), polymethylmethacrylate (PMMA), a silicon resin, and an epoxy resin.

13. A display device comprising:
the backlight unit (605) of any one of claims 1 to 12; and
a liquid crystal panel (601) configured to receive light from the backlight unit (605).

14. The display device according to claim 13, further comprising an optical sheet (603) between the backlight unit (605) and the liquid crystal panel (601).

15. The display device according to claim 13, further comprising a reflection plate (607) under the backlight unit (605).
